Europäisches Patentamt

European Patent Office

Office européen des brevets

(11) Veröffentlichungsnummer: **0 348 013**

**A1**

## (12) EUROPÄISCHE PATENTANMELDUNG

(21) Anmeldenummer: 89201669.2

(22) Anmeldetag: 08.06.89

(51) Int. Cl.⁴: **B01D 46/42** , **F24F 13/00**

(30) Priorität: 20.06.88 DE 3820788

(43) Veröffentlichungstag der Anmeldung:
27.12.89 Patentblatt 89/52

(84) Benannte Vertragsstaaten:
ES GR

(71) Anmelder: Kessler & Luch - Produkte GmbH
Rathenaustrasse 8 Postfach 58 10
D-6300 Giessen 1(DE)

(72) Erfinder: Kohnen, Franz
Hagstrasse 14
D-6300 Giessen(DE)

(54) **Vorrichtung zum Einsetzen insbesondere von Filterzellen in Rasterdecken.**

(57) Um Filterzellen (1) in die ihnen zugeordnete, von Filteraufnahmeprofilen (4) gebildete, Aufnahmeöffnung ohne verkanten einzubringen und bis zum Verriegeln zu halten, wird eine Hubvorrichtung vorgeschlagen, die an die Filteraufnahmeprofile (4) anhängbar ist, die aus einem aus Tragholmen (22) und Querholmen (23) gebildeteten Grundrahmen besteht, wobei nahe den Ecken des Grundrahmens mit Antriebsscheiben (19) versehene Muttern (17) angeordnet sind, die ihrerseits Spindeln (14) aufnehmen, die wiederum über Haken (16) in die Filteraufnahmeprofile (4) einhängbar sind.

Fig.1

EP 0 348 013 A1

## Vorrichtung zum Einsetzen insbesondere von Filterzellen in Rasterdecken

Die Erfindung betrifft eine Vorrichtung zum Einbau, insbesondere von Filterzellen in eine aus Filteraufnahmeprofilen gebildete Rasterdecke o.dgl. von unten.

Zum Einsetzen von Filterzellen werden Filteraufnahmerahmen oder Filtergehäuse verwandt, die die Luftfilterzelle mit geringem Spiel umgeben. Dies hat sich insbesondere in der Reinraumtechnik als notwendig erwiesen, um die durch die Filteraufnahmeprofile bewirkte "Abschattung" des Strömungsflusses möglichst gering zu halten. Weiter hat sich als vorteilhaft herausgestellt, daß als Dichtungen "Tauchdichtungen" eingesetzt werden, bei denen ein umlaufender Dichtkragen in eine mit einer zähen oder erstarrten und verflüssigbaren Dichtflüssigkeit gefüllte Dichtrinne eintaucht, wobei die Dichtrinne und der Dichtkragen am Filteraufnahmeprofil bzw. an der Filterzelle angeordnet lückenlos umlaufend ausgebildet sind. Üblicherweise werden wegen des umlaufenden Dichtkragens die Filterzellen von oben in die Filteraufnahmeprofile eingesetzt. Dies bedeutet, daß zum Filterwechsel die Deckenfläche von oben her zugängig sein muß. Um derartige Filterzellen von unten einsetzen zu können sind Rahmenkonstruktionen bekannt, bei denen in die umlaufenden Dichtrinnen der Filteraufnahmeprofile Hilfsrahmen eingesetzt sind, die ihrerseits mit einem umlaufenden Dichtkragen versehen sind. Die dazu passenden Filterzellen haben bündig mit der Außenwand der Filterzellenseitenwände abschneidend eine auf die obere Stirnseite der Filterzellenseitenwände aufgesetzte umlaufende Dichtrinne. Diese Zellen lassen sich von unten her einsetzen. Das Hantieren dieser Zellen, insbesondere wenn die Dichtflüssigkeit durch Erhitzen verflüssigt wird ist umständlich, ein Verkanten kann zu einem "Überlaufen" der heißen Dichtflüssigkeit führen, wodurch eine Verletzungsgefahr für die unter der Zelle stehenden Monteure gegeben ist. Sind die Filterzellen mit aus elastischem Material gebildeten Dichtstreifen versehen, lassen sie sich ebenfalls von unten einsetzen, wobei eine Anpreßvorrichtung vorgesehen sein muß, die für den notwendigen Abdichtdruck sorgt. Auch in diesen Fällen ist das Einsetzen der Filterzelle von unten her nicht ohne Schwierigkeiten, zumal moderne Filterzellen bei einer Größe von 0,9 m x 1,8 m nicht ohne Schwierigkeiten handhabbar sind.

Hier setzt die Erfindung ein, der die Aufgabe zugrunde liegt eine Vorrichtung anzugeben, mit deren Hilfe die Filterzellen von unten in die ihnen zugeordnete von den Filteraufnahmeprofilen gebildete Öffnung eingebracht werden können, ohne daß die Filterzelle verkantet und daß sie in eingebrachter Position gehalten werden können, bis die Filterzelle in der eingebrachten Position verriegelt ist. Darüber hinaus soll die Vorrichtung in einfacher Weise herstell- und anwendbar sein.

Diese Aufgabe wird nach der Erfindung gelöst durch eine Vorrichtung mit den Kennzeichen des Anspruchs 1; vorteilhafte Weiterbildungen und bevorzugte Ausführungsformen beschreiben die Unteransprüche.

Durch das Anhängen einer Hebevorrichtung an die Filteraufnahmeprofile wird eine abgehängte "Hebebühne" geschaffen, auf die Filterzelle aufgelegt werden kann, wobei die vier synchron zueinander angetriebenen Spindeln über die auf ihnen befindlichen Muttern diese "Hebebühne" ohne Verkanten nach oben bewegt. Die Synchronisierung wird erreicht durch einen Antriebsmotor, der zumindest auf eine der Gewindespindeln wirkt und durch einen Synchronisierungsriemen, der alle vier Spindeln umschlingt. Dieser Antriebsmotor wird zweckmäßigerweise an der "Hebebühne" angehängt und ist somit über die "Hebebühne" auf die auf- und abgehenden Spindelmuttern abgestützt.

Zum Einhängen wird vorteilhaft ein aus einem flachen Blechstreifen geformter Haken benutzt, der mit seinem Hakenteil zwischen Filterzelle und Aufnahmering durchgeführt und -bei Filteraufnahmeprofilen mit Dichtrinnen - auf dem Dichtrinnensteg eingehakt wird. Auch bei geringfügigem Spiel zwischen Filterzelle und Filteraufnahmeprofil ist es so möglich die Gewindespindel an das Filteraufnahmeprofil anzuhängen.

Die Muttern sind auf ihrer Oberseite mit einer auf Rollkörpern gelagerten Stützscheibe versehen, auf die die Hebebühne abgestützt ist.Dadurch wird die Hebebühne unbeeinflußt von der Drehung der Mutter lediglich gehoben. Entsprechende Aufsatzstücke, die gegeneinander versteift sind, nehmen die vier unteren Ecken der Filterzelle auf, die mit einem äußeren oder einem inneren Rand versehen ein Verschieben der Filterzelle auf ihrer Auflage verhindern. Dies ist im Hinblick auf ein Abgleiten der Filterzelle von der Auflage bedeutsam, da die Gefahr besteht, daß bei einem Abgleiten Teile der Hebebühne das gefaltete Filtermedium durchstoßen und so die Filterzelle unbrauchbar werden lassen.

Zum Antrieb eignen sich alle Arten von Motoren, wobei im allgemeinen elektrisch angetriebene Motoren bevorzugt werden und hierbei solche, die mit einer Spannung unterhalb der Gefährdungsgrenze von 42 V betrieben werden. Die Hubbewegung erfolgt dabei auch bei relativ hohen Motor-Drehzahlen mit hinreichend kleiner Geschwindigkeit, so daß das "Einfahren" der Filterzelle in den von den Filteraufnahmeprofilen gebildeten Aufnahmerahmen beobachtet und bei einem fehlerhaften Einführen die Bewegung unverzüglich gestopt werden kann. Soll die Hubgeschwindigkeit weiter verringert werden, empfiehlt es sich Gewindespindeln mit Feingewinde und entsprechend kleiner Gewindesteigung einzusetzen sowie in ihrer Drehzahl herabgesetzte Motorkonstruktionen.

Für den Antrieb genügt es, wenn der Motor eine der vier Gewindespindeln über einen Flachriemen, Keilriemen, Zahnriemen oder über eine Kette antreibt. Die Synchronisierung wird dabei zweckmäßigerweise mit einem umlaufenden Zahnriemen vorgenommen, selbstverständlich können auch Ketten eingesetzt werden. Eine symmetrische Gestaltung des Antriebs verringert auftretende Momente; hierzu werden vom Antriebsmotor ausgehend zwei einander diagonal gegenüberliegende Gewindespindeln mit Antriebsriemen angetrieben, wobei der Synchronisierungsriemen alle vier Gewindespindeln wie im Falle des einfachen Antriebs umschlingt.

Das Einsetzen erfolgt durch Auflegen der Filterzelle auf die "Hebebühne" und das Einschalten des Motors. Die sich synchron drehenden Gewindespindeln heben die auf ihnen vorgesehenen Muttern und damit die auf der Hebebühne befindliche Filterzelle. Beim Einfahren in den von vier Filteraufnahmeprofil-Abschnitten gebildeten Aufnahmerahmen kann wegen der (relativ) losen Aufhängung die Lage der Filterzelle noch geringfügig korrigiert werden. Die Filterzelle wird so einwandfrei in ihren Sitz gefahren, bis die Abdichtung hergestellt ist. Dann wird die Filterzelle in dieser Position verriegelt.

Das Wesen der Erfindung wird anhand der Fig. 1 bis 3 näher beschrieben, dabei zeigen

Fig. 1 eine Filterzelle auf der Einbauvorrichtung, die an Filteraufnahmeprofile angehängt ist (links vor dem Anheben, rechts nach Erreichen der Endposition)

Fig. 2 eine Darstellung des Antriebs mit zwei angetriebenen, einander diagonal gegenüberliegenden Gewindespindeln,

Fig. 3 eine Ansicht der Vorrichtung mit das Getriebe umschließender Kassette

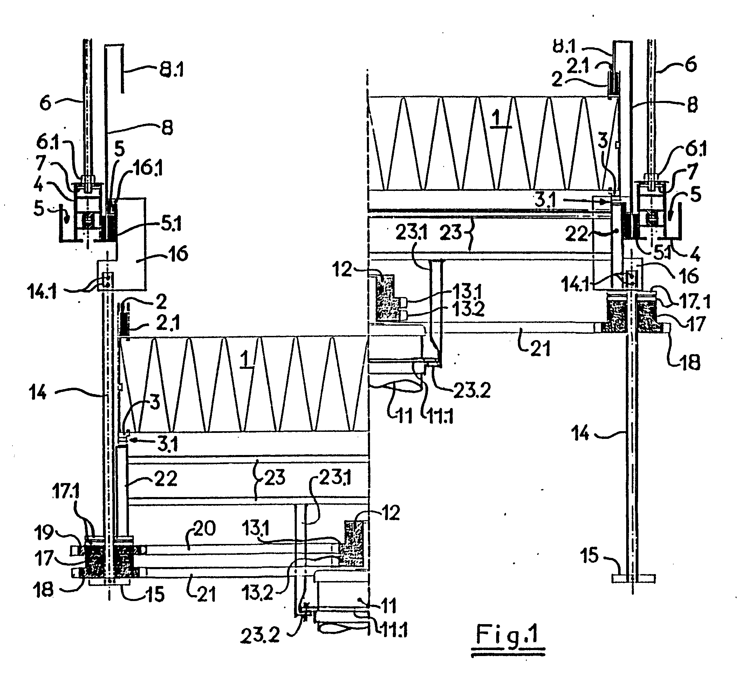

Die Fig. 1 zeigt die in eine Filteraufnahme einzubauende Fig. 1, wobei die linke Hälfte der Fig. 1 die Filterzelle vor dem Anheben und die rechte Hälfte die Filterzelle nach dem Anheben in ihren Filtersitz darstellt. Die Filterzelle 1 weist an ihrer oberen Stirnseite eine umlaufende Dichtrinne 2, die mit einem flüssigen oder verflüssigbarem Dichtmittel 2.1 gefüllt ist. Korrespondierend dazu weist die untere Seite ein verstärktes Filterpacklager 3 auf, wobei das nicht näher bezeichnete Filterpack selbst zwischen dem Rinnenboden und dem unteren Filterpacklager mittels Dichtmasse eingegossen ist. Im verstärkten unteren Filterpacklager 3 ist eine Bohrung 3.1 durch die ein- nicht näher dargestellter - Verriegelungsbolzen zum Verriegeln der Filterzelle in angehobener Position geschoben werden kann. Der rechte Teil der Fig. 1 zeigt die gleiche Zelle mit den gleichen Bezugszeichen in angehobener Position, jedoch ohne Verriegelung.

Die Arbeitsposition der Filterzelle 1 - wie in dem rechten Teil der Fig. 1 dargestellt - wird durch die Filteraufnahmeprofile 4 gegeben. Diese Filteraufnahmeprofile 4 sind mittels Hängeeisen 6 von der - nicht näher dargestellten - Raumdecke abgehängt, wobei Gleitsteine 7 in einem Schlitz des Filteraufnahmeprofils das als Gewindestange ausgebildete Hängeeisen 6 aufnehmen, das mit der Mutter 6.1 gegengeschraubt und somit festgelegt wird. Diese Art der Befestigung gestattet ein Ausrichten des Filteraufnahmeprofils 4. Seitlich am Filteraufnahmeprofil 4 sind die Dichtrinnen 5, die mit der flüssigen oder verflüssigbaren Dichtmasse 5.1 gefüllt sind.

Zum Anheben der Filterzelle 1 ist eine Vorrichtung an die Filterprofile mittels der Haken 16 angehängt, wobei die Haken 16 aus einem dünnen Blech gebildet sind, das zwischen Filterzelle und Filteraufnahmeprofil einführbar ist. In der dargestellten Lage befinden sich die hakenförmigen Blechstreifen 16 unmittelbar vor dem - nicht näher dargestellten -hinteren Filteraufnahmeprofil, sie liegen somit parallel zur - nicht näher dargestellten - hinteren Seitenwand der Filterzelle 1. Mit dem Hakenteil 16.1 greifen sie dabei über den die Dichtrinne 5 bildenden Steg. Am Blechstreifen des Hakenteils 16 ist die Gewindespindel 14 mit Befestigungsstiften, Nieten oder Schrauben 14.1 verdrehungssicher festgelegt. Das untere Ende der Gewindespindel ist mit einer Platte 15 verschlossen. Auf der Gewindespindel befindet sich die Mutter 17, deren Weg auf der einen Seite von der unteren Platte 15 und auf der anderen Seite von der Unterkante des Hakenteils 16 begrenzt ist. Auf der Mutter befindet sich auf Rollkörpern gelagert eine Scheibe 17, auf der die Tragholme 22 der "Hebebühne" befestigt sind. Die Tragholme 22 sind untereinander reelingartig durch Querholme 23 verbunden. Dadurch wird die Hebebühne insich gegen Verdrehung gesichert. Es versteht sich von selbst, daß die Gewindespindel 14 eine achsparallele Nut aufweisen kann und die auf den Rollkörpern gelagerte Platte 17.1 einen in die Nut eingreifenden Vorsprung, wodurch jede Drehung dieser Platte verhindert wird. Im Zentrum unterhalb der Filterzelle befindet sich der Antriebsmotor 11 mit zwei Abtriebsscheiben 13.1 und 13.2. Die eine der Abtriebsscheiben 13.1 ist mit der dargestellten linken Gewindespindel 14 über den Antriebsriemen 20 verbunden. Der Antriebsriemen 20 kann ein normaler Flachriemen sein, besondere Anforderungen an Schlupffreiheit werden nicht gestellt. Der Antriebsriemen 20 greift in eine Antriebsscheibe 19 der Mutter 17 ein. Die Mutter besitzt weiter eine zweite Scheibe 18 zur Aufnahme des Synchronisierungsriemens 21. Dieser Synchronisierungsriemen 21 umschlingt alle vier Muttern, deren entsprechenden Aufnahmescheiben 18 in gleicher Höhe sind. Die - in der Fig. nicht dargestellte - diagonal der angetriebenen Gewindespindel gegenüberliegende Gewindespindel ist mit einer zwischen den Scheiben 18 und 19 angeordneten weiteren Scheibe versehen zur Aufnahme des zweiten Antriebsriemens, der von der Abtriebsscheibe 13.2 über einen - nicht näher dargestellten - weiteren Antriebsriemen angetrieben ist. Der Motor selbst ist mit einem umlaufenden Flansch 11.1 versehen, der als Motorhalterung dient. Es versteht sich von selbst, daß der umlaufende Flansch durch einzelne Befestigungswinkel ersetzt werden kann. An der Hebebühne, die von den Tragholmen 22 und diese verbindende Querholme 23 gebildet ist, ist die Befestigung für den Antriebsmotor 11 vorgesehen. Diese besteht beispielsweise in an den Querholmen 23 befestigten Hängeeisen 23.1 mit einem Auflagewinkel 23.2, auf dem der umlaufende Flansch 11.1 (oder die einzelnen Befestigungsböcke) aufgelegt und mit Schrauben, Nieten o.dgl. verbunden ist.

In der dargestellten Ausführung des Filteraufnahmerahmens und der Filterzelle ist in die umlaufende Rinne 5 des Filteraufnahmeprofils ein Hilfsrahmen 8 eingesetzt, der in seiner Grundform U-förmig ist, wobei der freie Schenkel 8.1 entsprechend verkürzt in die Dichtrinne 2 der Filterzelle 1 eintaucht und von der zähflüssigen oder verflüssigten Dichtmasse 2.1 abdichtend aufgenommen wird.

Die Fig. 2 zeigt einen Blick auf den (hier für eine Zelle dargestellten) Filteraufnahmerahmen, gebildet aus Filteraufnahmeprofilen, die nahe den Ekken geschnitten sind, um einen Blick auf die Muttern 17 der Hubvorrichtung zu ermöglichen. Die Hubvorrichtung selbst ist nicht näher dargestellt, es sind lediglich im Bereich der Ecken des Filterrahmens die Auflagen 22.1 zu erkennen, die an den oberen Enden der Stützen 22 vorgesehen sind und die die lagegesicherte Aufnahme der Filterzelle 1 ermöglichen. Zwei einander diagonal gegenüberliegende Muttern 17 sind mittels der Antriebsriemen 20 und 20´ angetrieben, wobei die Abtriebsräder 13 der Abtriebswelle 12 des Motors 11 den zum Antrieb dieser Riemen notwendigen Zug übertragen. Von den beiden angetriebenen Muttern 17 werden mit Hilfe des Synchronisierungsriemens 21 alle vier Muttern synchron in Bewegung gehalten, so daß sie auf den Gewinden der Spindeln 14 gleichmäßig auf- bzw. abgeführt werden und dabei die "Hebebühne" mitnehmen.

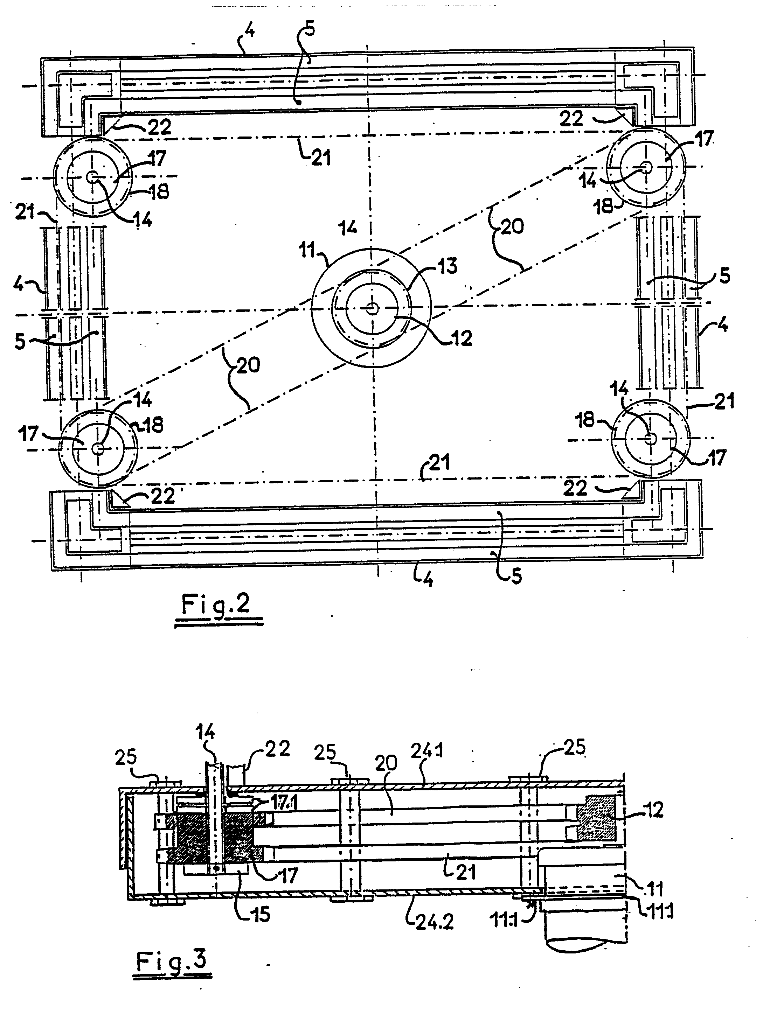

Die Fig. 3 zeigt schließlich eine geschlossene Ausführungsform des Antriebs. Hier ist eine kassettenartige Abdeckung des gesamten Getriebes vorgesehen, die aus einer Oberschale 24.1 und einer Unterschale 24.2 besteht. Diese beiden Schalen werden durch Verbindungselemente 25, die durch - nicht näher bezeichnete - Distanzhülsen auf Abstand gehalten werden aneinander befestigt. Dabei ist die obere Schale 24.1 gegenüber dem Lager 17.1 mit einem Ring oder einem eingreifenden Kragen o.dgl. abgestützt. Über die Befestigungselemente 25 ist die Unterschale 24.2 mit dem daran befestigten Antriebsmotor 11 festgelegt, so daß die gesamte Last auf die Oberschale 25.1 übertragen und letztendlich in die Drucklager 17.1 eingeleitet wird. Die Befestigungselemente 25 sind dabei so verteilt, daß sie teils außerhalb, teils innerhalb der Wege der Antriebsriemen liegen, wobei es auf die im einzelnen gewählte Verteilung dieser Befestigungselemente 25 nicht ankommt. Durch diese kassettenartige Verkleidung wird ein Schutz der Antriebselemente erreicht und darüber hinaus sichergestellt, daß während des Betriebs ein Eingreifen in bewegte Teile ausgeschlossen ist.

## Ansprüche

1. Vorrichtung zum Einbau, insbesondere von Filterzellen in eine aus Filteraufnahmeprofilen gebildete Rasterdecke o.dgl. von unten, **dadurch gekennzeichnet**, daß an die einer Filterzelle zugeordneten Filteraufnahmeprofilen eine Hubvorrichtung anhängbar ist, die aus einem Grundrahmen mit vier eckständigen Gewindespindeln besteht, an deren oberen Enden mit den Filteraufnahmeprofilen zusammenwirkende Haken vorgesehen sind und die Muttern aufweisen, auf deren Oberfläche je ein Dichtkranz vorgesehen ist und die mittels eines Antriebsmotors synchron antreibbar sind.

2. Vorrichtung nach Anspruch 1, **dadurch gekennzeichnet**, daß die Haken von dünnen Blechabschnitten gebildet sind, deren Hakenteil zwischen Filterzelle und Filteraufnahmeprofil durchführbar und mit dem Filteraufnahmeprofil vorzugsweise mit dessen Dichtrinne verhakbar ist.

3. Vorrichtung nach Anspruch 1 oder 2, **dadurch gekennzeichnet**, daß der Antriebsmotor eine Abtriebsscheibe aufweist und daß mindestens eine Gewindespindel eine Antriebsscheibe aufweist, wobei Abtriebsscheibe des Antriebsmotors und Antriebsscheibe der Gewindespindel von einem Antriebsriemen umschlungen sind und daß jede Gewindespindel eine Synchronisierungsscheibe aufweist und alle Gewindespindeln von einem Synchronisierungsriemen umschlungen sind.

4. Vorrichtung nach Anspruch 3, **dadurch gekennzeichnet**, daß zwei diagonal gegenüber liegend angeordnete Gewindespindeln je eine Antriebsscheibe aufweisen und daß der Motor mit zwei Abtriebsscheiben versehen ist, wobei zwei Antriebsriemen vorgesehen sind, jeder zwischen einer Abtriebsscheibe des Motors und der Antriebsscheibe der ihm zugeordneten Gewindespindel.

5. Vorrichtung nach einem der Ansprüche 3 oder 4, **dadurch gekennzeichnet**, daß zumindest der alle vier Gewindespindeln umschlingende Synchronisierungsriemen ein Flachriemen mit Zähnen ist.

Fig.1

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 827 926 (AB SVENSKA FLÄKTFABRIKEN) ----- | | B 01 D 46/42 F 24 F 13/00 |
| | | | **RECHERCHIERTE SACHGEBIETE (Int. Cl.4)** |
| | | | B 01 D 46/00 F 24 F 13/00 |

Der vorliegende Recherchenbericht wurde für alle Patentansprüche erstellt

| Recherchenort | Abschlußdatum der Recherche | Prüfer |
|---|---|---|
| DEN HAAG | 19-09-1989 | POLESAK, H.F. |

EPO FORM 1503 03.82 (P0403)